# EUROPÄISCHE PATENTSCHRIFT

(11) **EP 3 332 940 B1**
(45) Veröffentlichungstag und Bekanntmachung des Hinweises auf die Patenterteilung: **29.01.2020**
(21) Anmeldenummer: 17204254.1
(22) Anmeldetag: 29.11.2017
(51) Int. Cl.: B29C 48/92, B28B 3/22

(54) **SILIKONEXTRUSIONSANLAGE UND VERFAHREN ZUR SILIKONEXTRUSION**
SILICONE EXTRUSION INSTALLATION AND METHOD FOR SILICONE EXTRUSION
INSTALLATION D'EXTRUSION DE SILICONE ET PROCÉDÉ D'EXTRUSION DE SILICONE

(30) Priorität: 09.12.2016 DE 102016224607
(43) Veröffentlichungstag der Anmeldung: 13.06.2018
(73) Patentinhaber: Raumedic AG, 95213 Münchberg (DE)
(72) Erfinder: Silbermann, Martin, 95158 Kirchenlamitz (DE); Bär, Florian, 95233 Helmbrechts (DE)
(74) Vertreter: Rau, Schneck & Hübner Patentanwälte Rechtsanwälte PartGmbB

(56) Entgegenhaltungen:
- EP-A2- 0 470 510
- EP-A2- 0 687 543
- EP-A2- 0 806 280
- WO-A1-03/103915
- DD-A1- 206 343
- DD-A1- 227 648
- DE-A1- 2 218 353
- DE-A1- 2 229 171
- DE-A1- 2 616 666
- DE-A1-102010 060 130
- DE-B3-102011 122 935
- DE-C1- 3 905 535
- DE-C2- 3 526 050
- GB-A- 2 116 865
- JP-A- S60 116 424
- US-A- 2 262 989
- US-A- 3 522 627
- US-A- 3 744 727
- US-A- 4 764 020
- ELLAM M S: "EXTRUSION CONTROL IN FILM MAKING", MEASUREMENT AND CONTROL, INSTITUTE OF MEASUREMENT AND CONTROL. LONDON, GB, Bd. 28, Nr. 1, 1. Februar 1995 (1995-02-01), Seiten 5-09, XP000505453, ISSN: 0020-2940
- WARMUTH J: "Verarbeitungsentwicklung, ProzeÃ analyse und erweiterte ChargenprÃ 1/4 fung mit MeÃ extrudern und MeÃ knetern", PLAST VERARBEITER,, Bd. 34, Nr. 3, 1. März 1983 (1983-03-01), Seiten 222-226, XP001353783,

## Beschreibung

Die Erfindung betrifft eine Silikonextrusionsanlage. Ferner betrifft die Erfindung ein Verfahren zur Silikonextrusion mit einer derartigen Silikonextrusionsanlage.

Ein Silikonextruder ist bekannt aus der WO 2005/039847 A1.

Die US 4,764,020 beschreibt eine Vorrichtung zum Mischen und Extrudieren viskoser Flüssigkeiten. Die DD 227 648 A1 beschreibt eine Vorrichtung zur Beschickung von Extrusionsmaschinen. Die DD-PS 206 343 beschreibt eine Vorrichtung zur Beschickung von Extrudern und Spritzgießmaschinen. Die DE-OS 22 18 353 beschreibt eine Spritzeinheit für eine Spritzgießmaschine. Die US 3,522,627 beschreibt eine Vorrichtung zur kontinuierlichen Verarbeitung von plastischem Material. Die US 2,262,989 beschreibt ein Verfahren zur Ausbildung von thermoplastischer Folie. Die DE 39 05 535 C1 beschreibt eine Vorrichtung für die Einspeisung von Schüttgut. Die US 3,744,727 beschreibt eine Vorrichtung zum Wiederaufbereiten von Folie in ein Granulat. Die EP 0 806 280 A2 beschreibt eine Vorrichtung und eine Anlage zur Aufbereitung von Kunststoffgut. Die DE 10 2010 060 130 A1 beschreibt eine Mischvorrichtung und ein Verfahren zum Mischen eines Schüttgutes oder einer pastösen Masse. Die DE 10 2011 122 935 B3 beschreibt eine Zuführvorrichtung für eine Extruderschnecke. Die JPS 60 116 424 beschreibt ein Steuerverfahren für eine Drehzahl einer Beschickungsschnecke. Die EP 0 470 510 A2 beschreibt eine Beschickungsvorrichtung von Spritzgieß- und Extrudereinheiten. Aus dem Fachartikel von M. S. Ellam: "Extrusion control in film making", Measurement and Control, Instititute of Measurement and Control, London, GB, Bd. 28, Nr. 1, 1. Februar 1995, Seiten 5-9, XP000505453, ISSN: 0020-2940, ist eine Extrusionssteuerung zur Folienherstellung bekannt. Die DE-OS 22 29 171 beschreibt ein Verfahren und eine Vorrichtung zur Füllstandsregelung durch kontinuierliches Messen der Strahlungswärme eines Fördergutes. Die WO 03/103 915 A1 beschreibt eine Vorrichtung zur Aufbereitung von thermoplastischem Kunststoffmaterial. Die DE 35 26 050 C2 beschreibt ein Verfahren zum Betreiben eines Extruders. Der Fachartikel von J. Warmuth: "Verarbeitungsentwicklung, Prozeßanalyse und erweiterte Chargenprüfung mit Meßextrudern und Meßknetern", PLASTverarbeiter, Bd. 34, Nr. 3, 1. März 1983, Seiten 222-226, XP001353783, beschreibt die Verarbeitungsentwicklung, die Prozessanalyse und die erweiterte Chargenprüfung mit Messextrudern und Messknetern. Die GB 2 116 865 A beschreibt eine Misch- und Extrusionsvorrichtung. Die DE 26 16 666 A1 beschreibt ein Verfahren zum Verdichten von pulverförmigen Kautschukmischungen. Die EP 0 687 543 A2 beschreibt eine Vorrichtung zum Beschicken von Spritzgieß- und Extrudereinheiten.

Es ist die Aufgabe der vorliegenden Erfindung, einen Silikonextruder derart weiterzuentwickeln, dass er für die Massenherstellung von Silikonextrudat nutzbar ist.

Diese Aufgabe ist erfindungsgemäß gelöst durch eine Silikonextrusionsanlage mit den in Anspruch 1 angegebenen Merkmalen, sowie durch ein Verfahren zur Silikonextrusion nach Anspruch 9.

Erfindungsgemäß wurde erkannt, dass ein geregelter Betrieb der Silikonextrusionsanlage das Extrusionsergebnis verbessert. Hierbei hat sich insbesondere die Beibehaltung eines konstanten Beschickungsdrucks als für das Extrusionsergebnis besonders vorteilhaft herausgestellt. Bei der Silikon-Beschickungsvorrichtung der Silikonextrusionsanlage gemäß diesem weiteren Aspekt handelt es sich um eine Beschickungsvorrichtung mit einer Beschickungsschnecke und einem Aufgabetrichter.

Die Silikonextrusionsanlage hat mindestens einen Beschickungs-Temperatursensor zum Messen einer Ist-Beschickungstemperatur der zu extrudierenden Silikonmasse, der in einem Übergangsbereich zwischen der Silikon-Beschickungsvorrichtung und dem Silikonextruder angeordnet ist, wobei der Beschickungs-Temperatursensor mit der Regeleinheit in Signalverbindung steht. Bei einer derartigen Ausführung kann zudem die gemessene Ist-Beschickungstemperatur zur Erzeugung bzw. zur Modifikation einer Stellgröße für die Beschickungsvorrichtung genutzt werden.

Der drehantreibbare Aufgabetrichter verbessert weiterhin die Effizienz einer kontinuierlichen und störungsfreien Silikonbeschickung.

Der Beschickungs-Drehantrieb einerseits und der Aufgabetrichter-Drehantrieb andererseits sind voneinander unabhängig ausgeführt. Derart unabhängige Drehantriebe ermöglichen es, abhängig von Materialparametern der verwendeten, zu extrudierenden Silikonmasse, insbesondere abhängig von deren Zähigkeit bzw. abhängig von deren Adhäsionseigenschaften, einen optimierten Betriebspunkt der Beschickungsvorrichtung, also eine optimierte Kombination aus einer Drehzahl der Beschickungsschnecke einerseits und einer Drehzahl des Aufgabetrichters andererseits vorzugeben. Mit Hilfe unabhängiger Drehantriebe lassen sich zudem auch unkonventionelle Bewegungsmuster, beispielsweise nicht konstante Drehzahlen, Drehzahlrampen oder ähnliches realisieren. Alternativ zu unabhängigen Drehantrieben kann auch eine Silikonextrusionsanlage mit genau einem Antrieb sowohl für die Beschickungsschnecke als auch für den Aufgabetrichter zum Einsatz kommen.

Als weiterer Regelparameter zur Optimierung des Extrusionsergebnisses hat sich der Austragsdruck der zu extrudierenden Silikonmasse im Bereich des Werkzeugkopfes herausgestellt. Eine Ausführung der Silikonextrusionsanlage nach Anspruch 2 trägt dem Rechnung.

Die Vorteile eines Austrags-Temperatursensors nach Anspruch 3 entsprechen denen, die vorstehend im Zusammenhang mit dem Beschickungs-Temperatursensor bereits erläutert wurden.

Die Beschickungsschnecke der Silikonextrusionsanlage ist nach Anspruch 4 abschnittsweise mit konischer Einhüllenden und abschnittsweise mit zylindrischer Einhüllenden ausgeführt. Es wurde erkannt, dass eine möglichst automatisierte Beschickung des Silikonextruders für eine Extrudat-Massenherstellung wesentlich ist. Eine in anderem Zusammenhang bereits genutzte Fördervorrichtung mit einem Aufgabetrichter und einer hierin angeordneten Beschickungsschnecke hat sich überraschenderweise als Silikon-Beschickungsvorrichtung zum Beschicken des Silikonextruders als geeignet herausgestellt. Ein prozesssicheres kontinuierliches Beschicken des Silikonextruders ist mit einer derartigen Silikon-Beschickungsvorrichtung gewährleistet. Eine manuelle Silikonzuführung in den Beschickungskanal ist nicht erforderlich. Bei dem Silikonextruder kann es sich um einen Extruder mit einer Verfahrenslänge im Bereich von 15D handeln. Es kann ein Einschnecken- oder auch ein Doppelschneckenextruder zum Einsatz kommen. Die Beschickung kann insbesondere blasenfrei erfolgen. Die Beschickungsschnecke kann, insbesondere um den Konuswinkel des Aufgabetrichters, schräg zur Vertikalen geneigt angeordnet sein. Alternativ und insbesondere bei schräg gestelltem Trichter, dessen Trichterachse dann nicht vertikal steht, kann die Längsachse der Beschickungsschnecke auch horizontal angeordnet sein. Die Beschickungsschnecke mit abschnittsweise konischer Einhüllenden (Konusabschnitt) führt zu einer besonders effizienten und schonenden Silikon-Beschickung. Aufgrund des Konusabschnitts lässt sich insbesondere eine Variation einer Gangtiefe einer Schneckenwendel erzeugen, was zur entsprechenden Beeinflussung einer Förderwirkung der Beschickungsschnecke auf die Silikonmasse genutzt werden kann. Vorzugsweise ist ein antriebs- bzw. trichterseitiger Schneckenabschnitt mit konischer Einhüllenden ausgeführt. Die Beschickungsschnecke kann derart angeordnet sein, dass der Abschnitt mit konischer Einhüllenden im Aufgabetrichter und der Abschnitt mit zylindrischer Einhüllenden im Beschickungskanal liegt. Die Schneckenausführung mit abschnittsweise zylindrischer Einhüllenden erlaubt insbesondere dort, wo die Schnecke in einem Abschnitt des Beschickungskanals läuft, eine konstruktiv vergleichsweise einfache Einbaulösung. Der Konusabschnitt kann einen zylindrischen Grundkörper aufweisen, so dass sich die konische Einhüllende des Konusabschnitts aufgrund einer entsprechend sich ändernden Gangtiefe der Schneckenwendel ergibt.

Eine benachbarte Anordnung der Beschickungsschnecke zur Trichterwand nach Anspruch 5 hat sich zur effizienten Silikon-Beschickung als besonders geeignet herausgestellt. Ein Abstand der Beschickungsschnecke zur Trichterwand kann geringer sein als 1 mm.

Eine Konuswinkel-Abweichung nach Anspruch 6 führt zu einer effizienten und schonenden Silikon-Beschickung, bei der die Silikonmasse homogen und ohne unerwünschte Blasen im Beschickungskanal gefördert wird. Eine derartige Winkelabweichung ermöglicht eine Flexibilität bei der Vorgabe einer Gangtiefe der Schneckenwendel längs der Förderrichtung der Silikonmasse. Das Winkelverhältnis kann so sein, dass sich eine Gangtiefe der Schneckenwendel in Förderrichtung der Silikonmasse längs des Konusabschnitts verringert.

Ein Längenverhältnis nach Anspruch 7 hat sich für eine effiziente Beschickung als besonders geeignet herausgestellt. Dieses Längenverhältnis kann im Bereich zwischen 1,5 und 2,5 und insbesondere im Bereich von 1,55 und 2 liegen.

Eine Steuerung nach Anspruch 8 ermöglicht eine Vorgabe beispielsweise individueller Beschickungsprogramme, abgestimmt auf das jeweils zu beschickende Silikonmaterial.

Die Vorteile eines Silikonextrusionsverfahrens nach Anspruch 9 entsprechen denen, die vorstehend im Zusammenhang mit den beiden Aspekten der Silikonextrusionsanlage bereits erläutert wurden. Entsprechendes gilt für das mit diesem Extrusionsverfahren hergestellte Silikonextrudat. Bei dem Extrudat kann es sich um einen Schlauch, um ein Hohlprofil oder um ein Vollprofil handeln. Ein derartiges Silikonextrudat kann insbesondere in der Medizintechnik zum Einsatz kommen.

Ausführungsbeispiele der Erfindung werden nachfolgend anhand der Zeichnung näher erläutert. In dieser zeigen:
- Fig. 1: eine perspektivische Ansicht einer Silikonextrusionsanlage mit einem Silikonextruder und einer Silikon-Beschickungsvorrichtung in einer Beschickungsstellung zum Beschicken des Silikonextruders mit zu extrudierender Silikonmasse;
- Fig. 2: ebenfalls perspektivisch die Silikonextrusionsanlage nach Figur 1 mit der Beschickungsvorrichtung in einer Reinigungs-bzw. Wartungsstellung;
- Fig. 3: eine innere Details preisgebende, teilgeschnittene Darstellung eines Abschnitts der Silikonextrusionsanlage im Bereich eines Beschickungskanals zwischen einem Aufgabetrichter der Silikon-Beschickungsvorrichtung und einer Einzugszone des Silikonextruders;
- Fig. 4: einen Axialschnitt durch einen Ausschnitt einer weiteren Ausführung der Anlage mit schräg gestelltem Trichter im Bereich der Silikon-Beschickungsvorrichtung, wobei die Schnittebene eine Symmetrieachse des Aufgabetrichters sowie eine Längsachse einer Beschickungsschnecke der Beschickungsvorrichtung beinhaltet und zur Veranschaulichung auch mit einer Längsachse einer Extruderschnecke des Silikonextruders zusammenfällt;
- Fig. 5: ein Signalverarbeitungsschema beim geregelten Betrieb der Silikonextrusionsanlage;
- Fig. 6: schematisch einen Ausschnitt einer weiteren Ausführung einer Silikonextrusionsanlage mit einem Silikonextruder und einer Silikon-Beschickungsvorrichtung mit einer Beschickungsschnecke, aufweisend einen Abschnitt mit konischer Einhüllenden (Konusabschnitt) und einen Abschnitt mit zylindrischer Einhüllenden (Zylinderabschnitt).

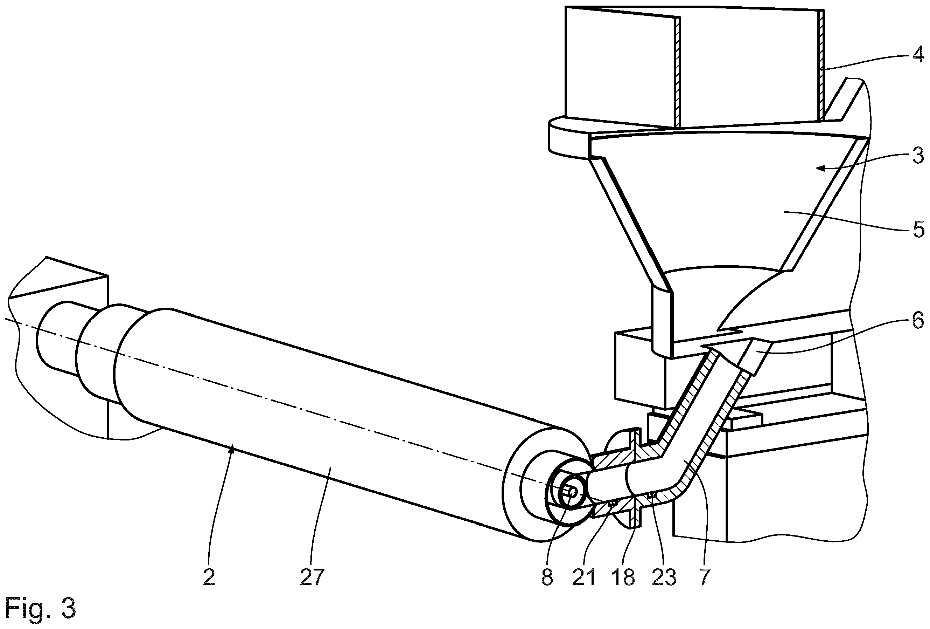

Eine Silikonextrusionsanlage 1 hat einen Silikonextruder 2 und eine Silikon-Beschickungsvorrichtung 3 zum Beschicken des Silikonextruders 2 mit zu extrudierender Silikonmasse. Die Silikon-Beschickungsvorrichtung 3 hat oben einen Aufgabekasten 4, der bodenseitig in einen Aufgabetrichter 5 mündet. Letzterer mündet wiederum in eine bodenseitige Beschickungsöffnung 6. Die Silikonmassen-Beschickungsöffnung 6 steht über einem Beschickungskanal 7 (vgl. Figur 3) mit einer Einzugszone 8 des Extruders 2 in Fluidverbindung.

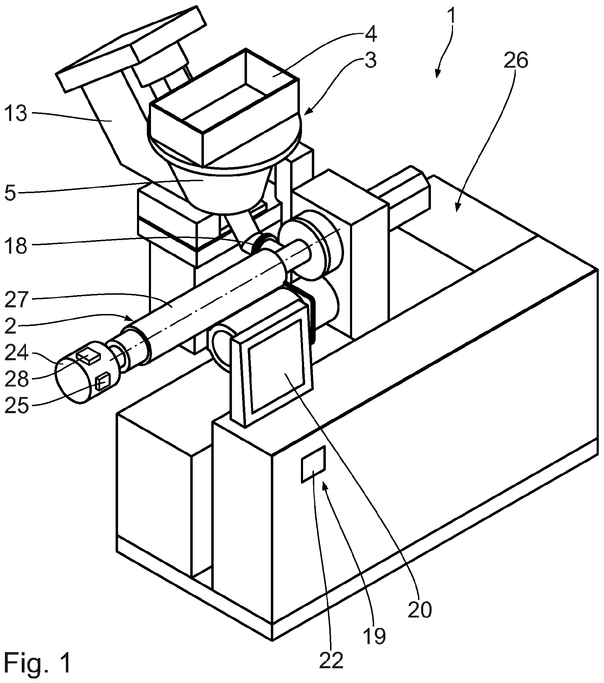

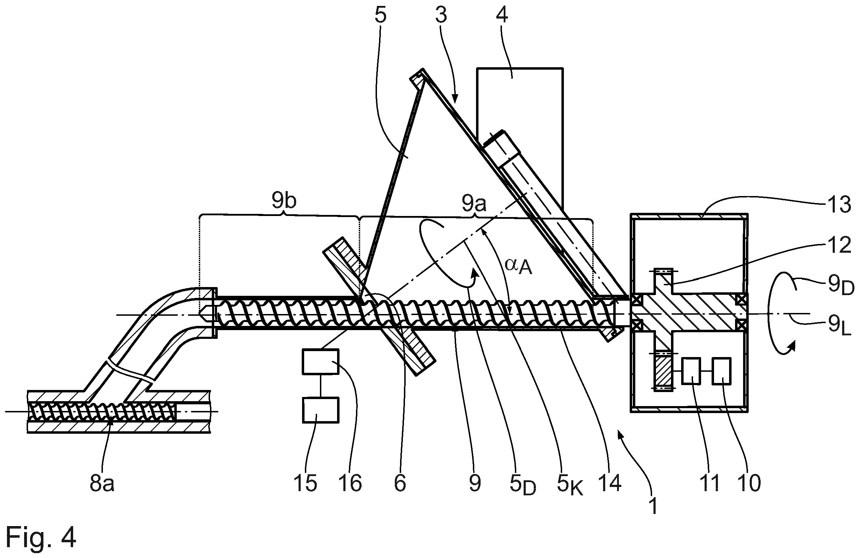

Die Figuren 1 bis 3 zeigen eine Ausführung der Silikon-Beschickungsvorrichtung mit aufrecht stehendem Aufgabetrichter 5. Eine alternative Ausführung mit schräg stehendem Aufgabetrichter 5 ist in der Figur 4 dargestellt. Komponenten, die denjenigen der Ausführung nach den Figuren 1 bis 3 entsprechen, sind in der Figur 4 mit gleichen Bezugsziffern bezeichnet und werden, soweit sie im Zusammenhang mit den Figuren 1 bis 3 bereits beschrieben sind, im Zusammenhang mit der Figur 4 nicht nochmals im Einzelnen erläutert.

Der Extruder 2 ist mit Verfahrenslänge 15D ausgeführt. Eine wirksame Länge einer Extruderschnecke 8a (vgl. Figur 4) beträgt also das 15-fache eines Durchmessers der Extruderschnecke 8a. Die Verfahrenslänge kann allgemein im Bereich zwischen 8D und 20D, besonders zwischen 10D und 15D liegen.

Der Silikonextruder 2 kann als Einschnecken- oder auch als Doppelschneckenextruder ausgeführt sein.

Teil der Silikon-Beschickungsvorrichtung 3 ist eine Beschickungsschnecke 9 (vgl. Figur 4). Die Extruderschnecke 8a ist in der Figur 4 zur Veranschaulichung abschnittsweise in einem Axialschnitt dargestellt. Im Regelfall liegen bei der Silikonextrusionsanlage 1 die Längsachsen der Extruderschnecke 8a einerseits und Beschickungsschnecke 9 andererseits nicht in der gleichen Ebene.

Die Beschickungsschnecke 9 ragt abschnittsweise in die Beschickungsöffnung 6, liegt also in einem antriebsseitigen Schneckenabschnitt 9a im Aufgabetrichter 5 und in einem einzugsseitigen Schneckenabschnitt 9b im Beschickungskanal 7. Der antriebsseitige Schneckenabschnitt 9a ist mit konisch sich zur Beschickungsöffnung 6 hin verjüngender Einhüllenden ausgeführt. Der einzugsseitige Schneckenabschnitt 9b ist mit zylindrischer Einhüllenden ausgeführt.

Die Beschickungsschnecke 9 ist drehantreibbar. Hierzu dient ein Beschickungsschnecken-Drehantrieb 10, der über ein Getriebe 11 auf ein Antriebszahnrad 12 wirkt, welches drehfest mit der Beschickungsschnecke 9 verbunden ist. Anstelle eines Getriebes kann zur Kraftübertragung zwischen dem Beschickungsschnecken-Drehantrieb 10 und dem Antriebszahnrad 12 auch ein Riementrieb zum Einsatz kommen. Im Bereich des Antriebszahnrads 12 ist die Beschickungsschnecke 9 axial und radial an einem Rahmengehäuse 13 der Silikonextrusionsanlage 1 gelagert. Mit Hilfe des Beschickungsschnecken-Drehantriebs 10 ist die Beschickungsschnecke 9 um ihre Längsachse 9_{L} drehantreibbar (vgl. Richtungspfeil 9_{D} in der Figur 4). Die Längsachse 9_{L} der Beschickungsschnecke 9 verläuft bei der Ausführung nach den Figuren 1 bis 3 um den Konuswinkel α_{A} des Trichters 5 schräg zur Vertikalen geneigt und in der Ausführung nach Figur 4 horizontal.

Der antriebsseitige Schneckenabschnitt 9a der Beschickungsschnecke 9 ist benachbart zu einer Trichterwand 14 des Aufgabetrichters 5 angeordnet. Ein Abstand zwischen dem antriebsseitigen Schneckenabschnitt 9a und der Trichterwand 14 ist kleiner als 1 mm.

Der Aufgabetrichter 5 ist ebenfalls drehantreibbar ausgeführt. Ein Aufgabetrichter-Drehantrieb 15 wirkt über ein Umlenkgetriebe 16 auf ein Antriebszahnrad des Aufgabetrichters 5. Nahe der Beschickungsöffnung 6 ist der Aufgabetrichter 5 wiederum axial und radial relativ zum Rahmengehäuse 13 gelagert. Mit Hilfe des Aufgabetrichter-Drehantriebs 15 ist der Aufgabetrichter 5 um seine Konus-Symmetrieachse 5_{K} drehantreibbar (vgl. Richtungspfeil 5_{D} in der Figur 4).

Die beiden Drehantriebe 10, 15 für die Beschickungsschnecke 9 einerseits und den Aufgabetrichter 5 andererseits sind voneinander unabhängig ausgeführt. Bei einer alternativen Ausführung der Silikonextrusionsanlage 1 kann auch genau ein gemeinsamer Antrieb für die Beschickungsschnecke 9 einerseits und den Aufgabetrichter 5 andererseits vorhanden sein, wobei ein vorgegebenes Drehzahlverhältnis zwischen einer Beschickungsschneckendrehzahl einerseits und einer Aufgabetrichterdrehzahl andererseits über ein Über- bzw. Untersetzungsgetriebe eines solchen gemeinsamen Antriebs vorgebbar ist. Die Drehantriebe 10, 15 oder der gemeinsame Antrieb können als Synchronmotor ausgeführt sein.

Die Beschickungsvorrichtung 3 wird mit Kühlwasser gekühlt, welches in einem Kreislauf geführt sein kann.

Die Figur 1 zeigt die Beschickungsvorrichtung 3 in einer Beschickungsstellung, also in einer Betriebsstellung zum Zuführen der zu extrudierenden Silikonmasse über den Aufgabekasten 4, den Aufgabetrichter 5, die Beschickungsöffnung 6 und den Beschickungskanal 7 hin zur Einzugszone 8 des Silikonextruders 2.

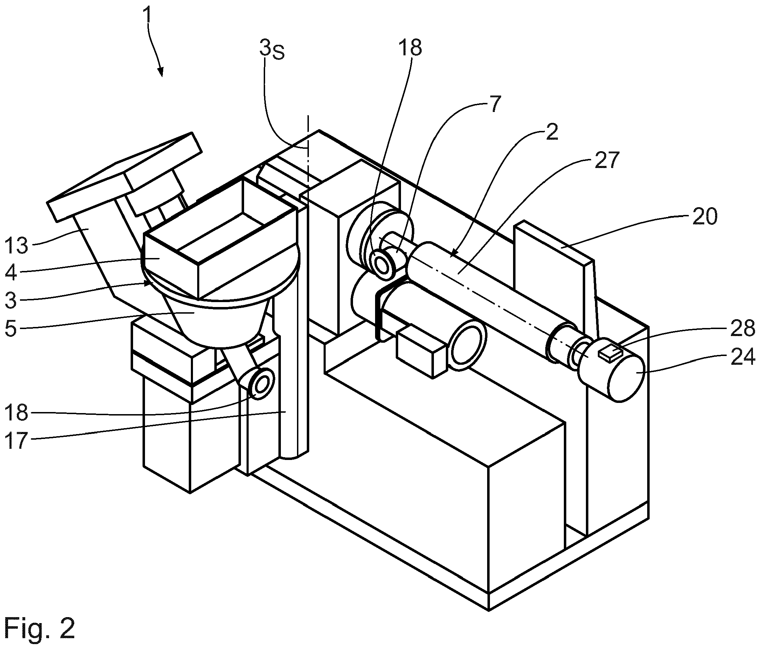

Die Figur 2 zeigt die Beschickungsvorrichtung 3 in einer relativ zur Beschickungsstellung der Figur 1 verlagerten Reinigungs- bzw. Wartungsstellung. In letzterer ist die Beschickungsvorrichtung 3 verglichen zur Beschickungsstellung einerseits um eine vertikale Schwenkachse 3s ausgeschwenkt und andererseits längs dieser Schwenkachse 3s linear nach unten verlagert. Sowohl die Schwenk- als auch die Verlagerungsbewegung sind in einem Verlagerungs-Rahmenabschnitt 17 des Rahmengehäuses 13 geführt.

Zur Vorbereitung des Ausschwenkens der Beschickungsvorrichtung 3 in die Reinigungs- bzw. Wartungsstellung wird eine Flanschverbindung 18 zwischen zwei Abschnitten des Beschickungskanals 7 gelöst.

Die Silikonextrusionsanlage 1 hat eine zentrale Steuerung 19 mit einem Bedienungsterminal 20 (vgl. Fig. 1). Die Steuerung 19 steht mit den beiden Drehantrieben 10, 15 in Signalverbindung.

In einem Übergangsbereich zwischen der Silikon-Beschickungsvorrichtung 3 und dem Silikonextruder 2, also im Bereich des Beschickungskanals 7, ist ein Beschickungs-Drucksensor 21 (vgl. Fig. 3) angeordnet. Letzterer dient zum Messen eines Ist-Beschickungsdrucks der zu extrudierenden Silikonmasse. Der Drucksensor 21 ist so angeordnet, dass ein Sensorsignal des Drucksensors 21 zur Regelung eines Drucks der zu extrudierenden Silikonmasse direkt vor der Einzugszone 8 des Extruders 2 erzeugt werden kann. Hierzu kann der Drucksensor 21, wie in der Figur 3 dargestellt, der Einzugszone 8 direkt benachbart angeordnet sein. Die Anordnung des Drucksensors 21 relativ zur Einzugszone 8 kann insbesondere so sein, dass zwischen der Anordnungsposition des Drucksensors 21 und der Einzugszone 8 keine weitere den Druck der Silikonmasse beeinflussende Komponente im Förderweg der Silikonmasse hin zum Extruder 2 angeordnet ist.

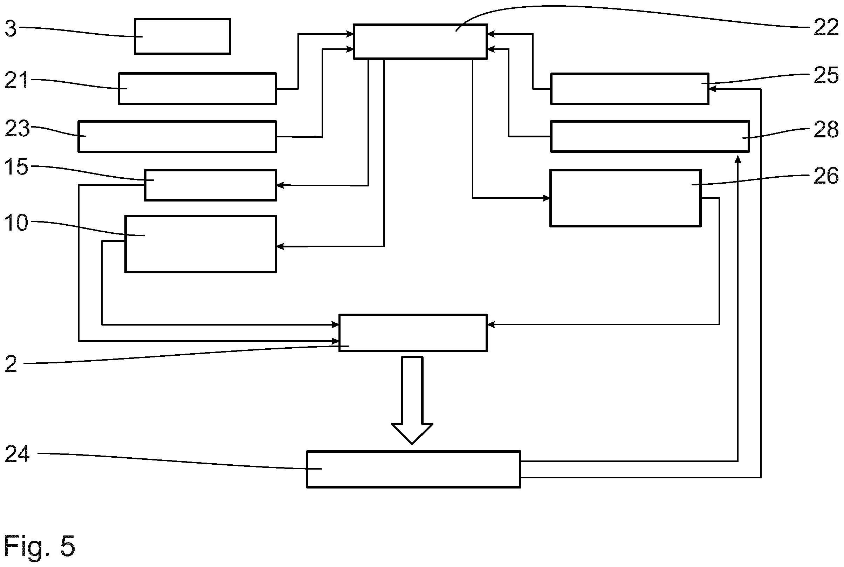

Teil der Steuerung 19 ist eine in der Figur 1 schematisch angedeutete Regeleinheit 22 (vgl. auch das Signalverarbeitungsschema nach Fig. 5), die mit dem Beschickungs-Drucksensor 21 und der Beschickungs-Antriebseinrichtung, also dem Beschickungs-Drehantrieb 10 und/oder dem Aufgabetrichter-Drehantrieb 15, in Signalverbindung steht. Die Regeleinheit 22 dient zur Vorgabe eines Soll-Beschickungsdrucks und zur Weiterleitung eines Stellsignals an die Beschickungs-Antriebseinheit 10 abhängig von einer ermittelten Differenz zwischen dem Soll-Beschickungsdruck und dem Ist-Beschickungsdruck.

Im Übergangsbereich 7 ist weiterhin ein Beschickungs-Temperatursensor 23 zum Messen einer Ist-Beschickungstemperatur der zu extrudierenden Silikonmasse angeordnet. Der Beschickungs-Temperatursensor 23 steht mit der Regeleinheit 22 in Signalverbindung.

Weiterhin hat die Silikonextrusionsanlage 1 in einem Werkzeugkopf 24 des Silikonextruders 2, der in den Figuren 1 und 2 schematisch dargestellt und im Bereich einer Austragszone des Silikonextruders 2 angeordnet ist, einen Werkzeugkopf-Drucksensor 25. Letzterer dient zum Messen eines Ist-Austragsdrucks der zu extrudierenden Silikonmasse. Die Regeleinheit 22 steht mit dem Werkzeugkopf-Drucksensor 25 und einer Extruder-Antriebseinheit in Signalverbindung. Die Extruder-Antriebseinheit 26 dient zum Antrieb mindestens einer Extruderschnecke, die in einem Gehäusezylinder 27 des Silikonextruders 2 läuft. Die Regeleinheit 22 dient zudem zur Vorgabe eines Soll-Austragsdrucks der zu extrudierenden Silikonmasse und zur Weiterleitung eines entsprechenden Stellsignals an die Extruder-Antriebseinheit 26 abhängig von einer ermittelten Differenz zwischen dem Soll-Austragsdruck und dem Ist-Austragsdruck.

Die Silikonextrusionsanlage 1 hat weiterhin einen Austrags-Temperatursensor 28, der ebenfalls im Werkzeugkopf 24 des Silikonextruders 2 angeordnet ist. Der Austrags-Temperatursensor 28 dient zum Messen einer Ist-Austragstemperatur der zu extrudierenden Silikonmasse. Der Austrags-Temperatursensor 28 steht mit der Regeleinheit 22 in Signalverbindung.

Bei Varianten der Silikonextrusionsanlage 1 können auch mehrere Beschickungs-Drucksensoren 21 und/oder mehrere Beschickungs-Temperatursensoren 23 und/oder mehrere Werkzeugkopf-Drucksensoren 25 und/oder mehrere Austrags-Temperatursensoren 28 zum Einsatz kommen. Verschiedene Temperatursensoren 28 können insbesondere in verschiedenen Temperaturzonen des Silikonextruders 2 angeordnet sein.

Eine Temperatur in der mindestens einen Temperaturzone im Förderweg der Silikonmasse der Silikonextrusionsanlage 1 kann über ein Temperiermedium vorgegeben werden. Beispielsweise kann der Aufgabetrichter 5 und/oder der Beschickungskanal 7 und/oder der Extruder 2, gegebenenfalls zonenweise, mit einem Temperiermedium, beispielsweise mit Wasser, aktiv temperiert und insbesondere gekühlt werden.

Eine weitere Regelgröße, die durch Vergleich eines gemessenen Istwertes mit einem vorgegebenen Sollwert über die Regeleinheit 22 konstant gehalten werden kann, ist ein Silikondurchsatz im Förderweg der Silikonextrusionsanlage 1. Dieser Durchsatz kann an verschiedenen Stellen des gesamten Förderwegs zwischen der Beschickungsvorrichtung 3 und dem Werkzeugkopf 24 gemessen werden.

Bei der Silikonextrusion mit der Silikonextrusionsanlage 1 wird die zu extrudierende Silikonmasse zunächst in die Silikon-Beschickungsvorrichtung 3 aufgegeben. Anschließend wird die zu extrudierende Silikonmasse durch die Silikon-Beschickungsvorrichtung 3 und den Silikonextruder 2 hindurchgefördert. Das erzeugte Extrudat wird dann aus dem Silikonextruder 2 ausgetragen. Bei einem geregelten Betrieb der Silikonextrusionsanlage 1 erfolgt ein geregeltes Fördern der Silikonmasse durch die Silikon-Beschickungsvorrichtung 3 und den Silikonextruder 2 unter Einsatz der Stellsignale der Regeleinheit 22. Diese Stellsignale der Regeleinheit 22 können auf den Aufgabetrichter-Drehantrieb 15 und/oder auf den Schnecken-Drehantrieb 10 und/oder auf die Extruder-Antriebseinheit 26 und/oder auf Stellkomponenten des Werkzeugkopfes 24 wirken. Abhängig von den Sensormessungen lässt sich also beispielsweise eine Rotationsgeschwindigkeit des Aufgabetrichters 5, eine Drehgeschwindigkeit der Beschickungsschnecke 9 und/oder eine Schneckengeschwindigkeit des Extruders 2 vorgeben beziehungsweise es lassen sich Stellgrößen einstellbarer Komponenten des Werkzeugkopfes 24 vorgeben. Antriebe der Silikonextrusionsanlage 1, besonders die Drehantriebe 10, 15 sowie der Extrusionsantrieb 26, können stufenlos regelbar ausgeführt sein.

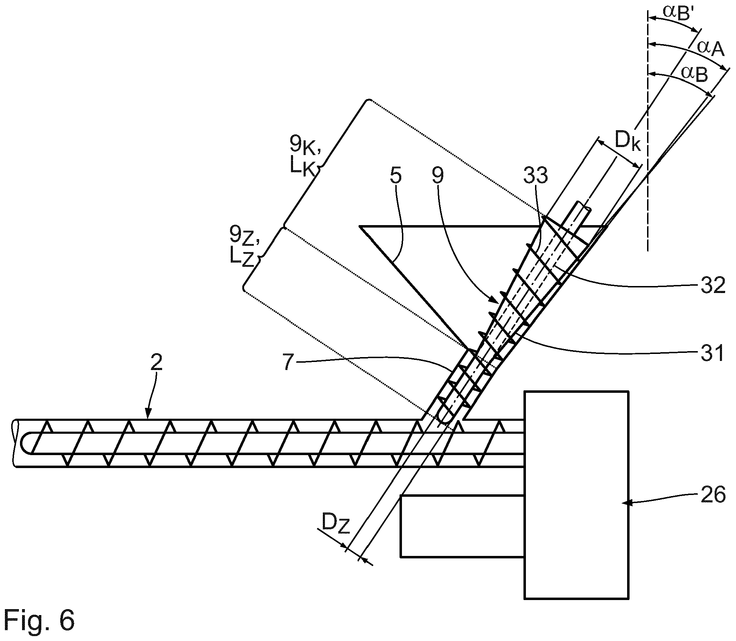

Figur 6 zeigt schematisch eine weitere Ausführung der Silikon-Beschickungsvorrichtung. Komponenten und Funktionen, insbesondere auch zur Steuer- und Regelungstechnik, die denjenigen der Ausführungen nach den Figuren 1 bis 5 entsprechen, sind in der Figur 6 mit gleichen Bezugsziffern bezeichnet und werden, soweit sie im Zusammenhang mit den Figuren 1 bis 5 bereits beschrieben sind, in Zusammenhang mit der Figur 6 nicht nochmals im Einzelnen erläutert.

Die Beschickungsschnecke 9 hat bei der Beschickungsvorrichtung nach Figur 6 einen Abschnitt 9_{K} mit konischer Einhüllenden, der auch als Konusabschnitt bezeichnet ist, und einen Abschnitt 9z mit zylindrischer Einhüllenden, der auch als Zylinderabschnitt bezeichnet ist. Der Konusabschnitt 9_{K} der Beschickungsschnecke 9 ist im Aufgabetrichter 5 angeordnet. Der Zylinderabschnitt 9z ist im Beschickungskanal 7 angeordnet.

Ein für die Beschickung im Aufgabetrichter 5 effektiver Mantelwandbereich 31 des Konusabschnitts 9_{K} hat einen Schnecken-Konuswinkel α_{B}, der gemessen wird zwischen der Konus-Symmetrieachse 5_{K} des Aufgabetrichters 5 und einer Schnittlinie dieses Mantelwandbereichs 31 im Längsschnitt nach Figur 6. Dieser Schnecken-Konuswinkel α_{B} ist größer als der Trichter-Konuswinkel α_{A}, wie der Vergleich dieser beiden Winkel in der Figur 6 anschaulich zeigt. Die beiden Winkel α_{A} und α_{B} weichen also voneinander ab.

Gestrichelt ist in der Figur 6 noch eine weitere Ausführung der Beschickungsschnecke 9 dargestellt, bei der ein Grundkörper des Konuskörpers 9_{K} zylindrisch verläuft. Ein Schnecken-Konuswinkel α_{B'} zwischen der Konus-Symmetrieachse 5_{K} und einer Schnittlinie eines Mantelwandbereichs 32 dieser alternativen Ausführung ist in diesem Fall kleiner als der Trichter-Konuswinkel α_{S}.

Eine Differenz zwischen den beiden Winkeln α_{A}, α_{B} bzw. α_{A}, α_{B'} ist größer als 0,5° und kleiner als 10°. Die Differenz kann kleiner sein als 5° und kann insbesondere im Bereich zwischen 1° und 3° liegen.

Die verschiedenen Gestaltungsmöglichkeiten des Konusabschnitts, nämlich Gestaltungen mit einem zylindrischen oder konischen Grundkörper sowie die Vorgabe eines Konuswinkels der konusförmigen Einhüllenden des Konusabschnitts 9_{K} ermöglichen eine entsprechend flexible Vorgabe eines Verlaufs einer Gangtiefe einer Schneckenwendel 33 des Konusabschnitts 9_{K} längs der Förderrichtung der Silikonmasse. Bei der durchgezogen in der Figur 6 dargestellten Ausführung des Konusabschnitts 9_{K} vergrößert sich diese Gangtiefe der Schneckenwendel 33 in der Förderrichtung der Silikonmasse. Bei der gestrichelt dargestellten Ausführung ist die Gangtiefe der Schneckenwendel im Einzugsbereich des Konusabschnitts 9_{K} maximal und verringert sich dann in Förderrichtung der Beschickungsschnecke 9. Diese Variabilität bei der Gangtiefen-Vorgabe ermöglicht eine Abstimmung der Förderwirkung der Beschickungsschnecke 9 auf die jeweiligen Förderanforderungen.

Längs der Beschickungsschnecke 9 hat der Konusabschnitt 9_{K} eine Länge L_{K} und der Zylinderabschnitt 9_{Z} eine Länge L_{Z}. Für ein Längenverhältnis L_{K}/L_{Z} zwischen dem Konusabschnitt 9_{K} und dem Zylinderabschnitt 9_{Z} gilt, dass dieses Längenverhältnis L_{K}/L_{Z} im Bereich zwischen 1 und 3 liegt, dass der Konusabschnitt 9_{K} also länger ist als der Zylinderabschnitt 9_{Z}. Dieses Längenverhältnis L_{K}/L_{Z} liegt bei der in der Figur 6 dargestellten Ausführung im Bereich von 1,6. Dieses Längenverhältnis L_{K}/L_{Z} kann zwischen 1,5 und 2,5 und kann zwischen 1,55 und 2 liegen.

Der Zylinderabschnitt 9_{Z} hat einschließlich der Schneckenwendel 33 einen Außendurchmesser von D_{Z}. Der Konusabschnitt 9_{K} hat einen maximalen Außendurchmesser einschließlich der Förderwendel 33 von D_{K}.

Für ein Dimensionsverhältnis L_{Z}/D_{Z} zwischen der Länge L_{Z} und dem Durchmesser D_{Z} des Zylinderabschnitts 9_{Z} gilt, dass dieses Dimensionsverhältnis im Bereich zwischen 3 und 5 und insbesondere im Bereich von 4 liegen kann. Ein Verhältnis L_{K}/D_{Z} zwischen der Länge L_{K} des Konusabschnitts 9_{K} und dem Durchmesser D_{Z} des Zylinderabschnitts 9_{Z} kann im Bereich zwischen 6 und 8 und kann insbesondere im Bereich von 7 liegen. Ein Durchmesserverhältnis D_{K}/D_{Z} zwischen dem Konusabschnitt 9_{K} und dem Zylinderabschnitt 9z kann im Bereich zwischen 1 und 2 und insbesondere im Bereich von 1,5 liegen.

Die Schneckenwendel 33 kann mit einem Profilquerschnitt mit zueinander parallelen Wendelflächen, von denen eine im Drehbetrieb der Beschickungsschnecke 9 einen Förderdruck auf die Silikonmasse ausübt, ausgeführt sein. Alternativ kann das Querschnittsprofil der Schneckenwendel 33 hin zum Übergang in den Schnecken-Grundkörper sich vergrößernd ausgeführt sein, um eine Stabilität der Schneckenwendel 33 zu vergrößern. Eine den Förderdruck auf die Silikonmasse aufbringende Förderwand der Schneckenwendel 33 kann dabei zur Mantelwand 31 beziehungsweise 32 der Beschickungsschnecke im Wesentlichen senkrecht verlaufend angeordnet sein. Eine der Förderwand gegenüberliegende Stabilisierungswand der Schneckenwendel 33 kann entsprechend schräg ausgeführt sein und über einen stumpfen Winkel beispielsweise im Bereich zwischen 110 und 170°, besonders im Bereich zwischen 130 und 140°, in die Mantelwand 31 beziehungsweise 32 übergehen.

Für einen Abstand zweier benachbarter Windungen beziehungsweise Stege der Schneckenwendel 33 kann folgendes gelten: Dieser Stegabstand kann im Bereich des Zylinderabschnitts 9z einen Wert SA1, im Bereich des Übergangs zwischen dem Zylinderabschnitt 9z und dem Konusabschnitt 9_{K} einen Wert SA2 und am einzugsseitigen Ende des Konusabschnitts 9_{K} einen Wert SA3 haben. Für das Größenverhältnis dieser Stegabstände SA1, SA2 und SA3 kann gelten: SA1 < SA2 und/oder SA2 < SA3. Insbesondere kann also gelten SA1 < SA2 < SA3.

Das Verhältnis SA2/SA1 kann im Bereich zwischen 1,1 und 1,5 und insbesondere im Bereich von 1,3 liegen. Das Verhältnis SA3/SA2 kann ebenfalls im Bereich zwischen 1,1 und 1,5 und insbesondere im Bereich von 1,3 liegen. Das Verhältnis SA3/SA1 kann im Bereich zwischen 1,2 und 2 und insbesondere im Bereich von 1,5 liegen.

Mit dem Extrusionsverfahren unter Einsatz der Silikonextrusionsanlage 1 kann ein Silikonextrudat in Form eines Schlauchs, eines Hohlprofils oder eines Vollprofils hergestellt werden.

## Patentansprüche

1. Silikonextrusionsanlage (1)
- mit einem Silikonextruder (2),
- mit einer Silikon-Beschickungsvorrichtung (3) zum Beschicken des Silikonextruders (2),
- wobei die Silikon-Beschickungsvorrichtung (3) aufweist:
-- einen Aufgabetrichter (5), der in eine bodenseitige Beschickungsöffnung (6) mündet, die über einen Beschickungskanal (7) mit einer Einzugszone (8) des Silikonextruders (2) in Fluidverbindung steht,
-- eine im Aufgabetrichter (5) angeordnete, drehantreibbare Beschickungsschnecke (9), die zumindest abschnittsweise in die Beschickungsöffnung (6) ragt,
- mit mindestens einer Beschickungs-Antriebseinrichtung (10) zum Antrieb der Silikon-Beschickungsvorrichtung (3),
- mit mindestens einem Beschickungs-Drucksensor (21) zum Messen eines Ist-Beschickungsdrucks zu extrudierender Silikonmasse, der in einem Übergangsbereich (7) zwischen der Silikon-Beschickungsvorrichtung (3) und dem Silikonextruder (2) angeordnet ist,
- mit einer Regeleinheit (22), die mit dem Beschickungs-Drucksensor (21) und der Beschickungs-Antriebseinrichtung (10) in Signalverbindung steht, zur Vorgabe eines Soll-Beschickungsdrucks und zur Weiterleitung eines Stellsignals an die Beschickungs-Antriebseinrichtung (10) abhängig von einer ermittelten Differenz zwischen dem Soll-Beschickungsdruck und dem Ist-Beschickungsdruck,
- mit mindestens einem Beschickungs-Temperatursensor (23) zum Messen einer Ist-Beschickungstemperatur der zu extrudierenden Silikonmasse, der in einem Übergangsbereich (7) zwischen der Silikon-Beschickungsvorrichtung (3) und dem Silikonextruder (2) angeordnet ist, wobei der Beschickungs-Temperatursensor (23) mit der Regeleinheit (22) in Signalverbindung steht,
- wobei der Aufgabetrichter (5) drehantreibbar ist,
- wobei die Beschickungs-Antriebseinrichtung einen Beschickungs-Drehantrieb (10) einerseits und einen Aufgabetrichter-Drehantrieb (15) andererseits aufweist, wobei die Drehantriebe (10,15) voneinander unabhängig ausgeführt sind.

2. Silikonextrusionsanlage nach Anspruch 1, **gekennzeichnet durch** mindestens einen Werkzeugkopf-Drucksensor (25) zum Messen eines Ist-Austragsdrucks zu extrudierender Silikonmasse, der in einem Werkzeugkopf (24) im Bereich einer Austragszone des Silikonextruders (2) angeordnet ist,
wobei die Regeleinheit (22) mit dem Werkzeugkopf-Drucksensor (25) und einer Extruder-Antriebseinheit (26) zum Antrieb einer Extruderschnecke in Signalverbindung steht, zur Vorgabe eines Soll-Austragsdrucks und zur Weiterleitung eines Stellsignals an die Extruder-Antriebseinheit abhängig von einer ermittelten Differenz zwischen dem Soll-Austragsdruck und dem Ist-Austragsdruck.

3. Silikonextrusionsanlage nach einem der Ansprüche 1 oder 2, **gekennzeichnet durch** mindestens einen Austrags-Temperatursensor (28) zum Messen einer Ist-Austragstemperatur der zu extrudierenden Silikonmasse, der im Werkzeugkopf (24) des Silikonextruders (2) angeordnet ist, wobei der Austrags-Temperatursensor (28) mit der Regeleinheit (22) in Signalverbindung steht.

4. Silikonextrusionsanlage (1) nach einem der Ansprüche 1 bis 3,
**dadurch gekennzeichnet, dass**
- die Beschickungsschnecke (9) abschnittsweise (9a; 9_{K}) mit konischer Einhüllenden ausgeführt ist,
- die Beschickungsschnecke (9) abschnittsweise (9b; 9z) mit zylindrischer Einhüllenden ausgeführt ist.

5. Silikonextrusionsanlage nach einem der Ansprüche 1 bis 4, **dadurch gekennzeichnet, dass** die Beschickungsschnecke (9) benachbart zu einer Trichterwand (14) des Aufgabetrichters (5) angeordnet ist.

6. Silikonextrusionsanlage nach einem der Ansprüche 1 bis 5, **dadurch gekennzeichnet, dass** ein Schnecken-Konuswinkel (α_{B}) des Abschnitts (9a; 9_{K}) mit konischer Einhüllenden von einem Trichter-Konuswinkel (α_{A}) des Aufgabetrichters (5) abweicht.

7. Silikonextrusionsanlage nach einem der Ansprüche 1 bis 6, **dadurch gekennzeichnet, dass** ein Längenverhältnis L_{K}/L_{Z} zwischen dem Abschnitt (9a; 9_{K}) mit konischer Einhüllenden und dem Abschnitt (9b; 9_{Z}) mit zylindrischer Einhüllenden, im Bereich zwischen 1 und 3 liegt.

8. Silikonextrusionsanlage nach einem der Ansprüche 1 bis 7, **gekennzeichnet durch** eine Steuerung (19), die mit den Drehantrieben (10, 15) in Signalverbindung steht.

9. Verfahren zur Silikonextrusion mit folgenden Schritten:
- Bereitstellen einer Silikonextrusionsanlage (2) nach einem der Ansprüche 1 bis 8,
- Aufgeben zu extrudierender Silikonmasse in die Silikon-Beschickungsvorrichtung (3),
- Fördern der Silikonmasse durch die Silikon-Beschickungsvorrichtung (3) und den Silikonextruder (2),
- Austragen des Extrudats aus dem Silikonextruder (2).

## Claims

1. Silicon extrusion plant (1)
- with a silicon extruder (2),
- with a silicon feed device (3) configured to load the silicon extruder (2),
- the silicon feed device (3) having
-- a feed hopper (5), which opens into a feed opening (6) disposed at the bottom thereof, said feed opening (6) being in a fluidic connection, via a feed duct (7), with an inlet zone (8) of the silicon extruder (2),
-- a feed screw (9) arranged in the feed hopper (5) in such a way as to be drivable for rotation, the feed screw (9) protruding into the feed opening (6) at least partly,
- at least one feed drive device (10) for driving the silicon feed device (3),
- at least one feed pressure sensor (21) configured to measure an actual feed pressure of silicon material to be extruded, the feed pressure sensor (21) being arranged in a transition region (7) between the silicon feed device (3) and the silicon extruder (2),
- a control unit (22), which is in signal communication with the feed pressure sensor (21) and the feed drive device (10) and configured to define a nominal feed pressure and to transmit an actuating signal to the feed drive device (10) depending on a difference detected between the nominal feed pressure and the actual feed pressure,
- at least one feed temperature sensor (23) configured to measure an actual feed temperature of the silicon material to be extruded, the feed temperature sensor (23) being arranged in a transition region (7) between the silicon feed device (3) and the silicon extruder (2), and the feed temperature sensor (23) being in signal communication with the control unit (22),
- wherein the feed hopper (5) is drivable for rotation,
- wherein the feed drive device has a feed rotary drive (10) on the one hand and a feed hopper rotary drive (15) on the other, the rotary drives (10, 15) being configured independently of one another.

2. Silicon extrusion plant as claimed in claim 1, **characterized by** at least one tool head pressure sensor (25) configured to measure an actual discharge pressure of silicon material to be extruded, the tool head pressure sensor (25) being arranged in a tool head (24) in the region of a discharge zone of the silicon extruder (2),
wherein the control unit (22) is in signal communication with the tool head pressure sensor (25) and an extruder drive unit (26) in order to drive an extruder screw, to set a nominal discharge pressure, and to transmit an actuating signal to the extruder drive unit depending on a difference detected between the nominal discharge pressure and the actual discharge pressure.

3. Silicon extrusion plant as claimed in any one of Claims 1 or 2, **characterized by** at least one discharge temperature sensor (28) configured to measure an actual discharge temperature of the silicon material to be extruded, the discharge temperature sensor (28) being arranged in the tool head (24) of the silicon extruder (2), wherein the discharge temperature sensor (28) is in signal communication with the control unit (22).

4. Silicon extrusion plant (1) as claimed in any one of claims 1 to 3, **characterized in that**
- portions (9a; 9_{K}) of the feed screw (9) are designed such as to have a conical envelope,
- portions (9b; 9_{Z}) of the feed screw (9) are designed such as to have a cylindrical envelope.

5. Silicon extrusion plant as claimed in any one of Claims 1 to 4, **characterized in that** the feed screw (9) is arranged adjacent to a hopper wall (14) of the feed hopper (5).

6. Silicon extrusion plant as claimed in any one of Claims 1 to 5, **characterized in that** a screw cone angle (α_{B}) of the conical envelope portion (9a; 9_{K}) differs from a hopper cone angle (α_{A}) of the feed hopper (5).

7. Silicon extrusion plant as claimed in any one of Claims 1 to 6, **characterized in that** a length ratio L_{K}/L_{Z} between the conical envelope portion (9a; 9_{K}) and the cylindrical envelope portion (9b; 9_{Z}) is in the range of between 1 and 3.

8. Silicon extrusion plant as claimed in any one of Claims 1 to 7, **characterized by** a control device (19), which is in signal communication with the rotary drives (10, 15).

9. Method for silicon extrusion, the method comprising the following steps:
- providing a silicon extrusion plant (2) as claimed in any one of Claims 1 to 8,
- loading silicon material to be extruded into the silicon feed device (3),
- conveying the silicon material through the silicon feed device (3) and the silicon extruder (2),
- discharging the extrudate from the silicon extruder (2).

## Revendications

1. Installation d'extrusion de silicone (1) comportant
- une extrudeuse de silicone (2),
- un dispositif d'alimentation de silicone (3) pour le chargement de l'extrudeuse de silicone (2),
- le dispositif d'alimentation de silicone (3) comprenant :
-- une trémie d'alimentation (5) qui débouche sur une ouverture d'alimentation (6) côté fond qui est en communication fluidique, par l'intermédiaire d'un canal de chargement (7), avec une zone d'alimentation (8) de l'extrudeuse de silicone (2),
-- une vis d'alimentation (9) disposée dans la trémie d'alimentation (5), pouvant être entraînée en rotation et faisant saillie au moins par sections dans l'ouverture d'alimentation (6),
- au moins un dispositif d'entraînement d'alimentation (10) pour l'entraînement du dispositif d'alimentation de silicone (3),
- au moins un capteur de pression d'alimentation (21) pour la mesure d'une pression d'alimentation réelle d'une masse de silicone à extruder, lequel capteur de pression d'alimentation est disposé dans une région de transition (7) entre le dispositif d'alimentation de silicone (3) et l'extrudeuse de silicone (2),
- une unité de régulation (22) en communication de signal avec le capteur de pression d'alimentation (21) et le dispositif d'entraînement d'alimentation (10) pour la spécification d'une pression d'alimentation de consigne et pour la transmission d'un signal de réglage au dispositif d'entraînement d'alimentation (10) en fonction d'une différence déterminée entre la pression d'alimentation de consigne et la pression de chargement réelle,
- au moins un capteur de température d'alimentation (23) pour la mesure d'une température d'alimentation réelle de la masse de silicone à extruder, lequel capteur de température d'alimentation est disposé dans une région de transition (7) entre le dispositif d'alimentation de silicone (3) et l'extrudeuse de silicone (2), le capteur de température d'alimentation (23) étant en communication de signal avec l'unité de régulation (22),
- la trémie d'alimentation (5) pouvant être entraînée en rotation,
- le dispositif d'entraînement d'alimentation comportant un entraînement rotatif d'alimentation (10) d'une part et un entraînement rotatif de trémie d'alimentation (15) d'autre part, les entraînements rotatifs (10,15) étant réalisés indépendamment les uns des autres.

2. Installation d'extrusion de silicone selon la revendication 1, **caractérisée par** au moins un capteur de pression de tête d'outil (25) pour la mesure d'une pression de décharge réelle de la masse de silicone à extruder, lequel capteur de pression de tête d'outil est disposé dans une tête d'outil (24) dans la région d'une zone de décharge de l'extrudeuse de silicone (2), l'unité de régulation (22) étant en communication de signal avec le capteur de pression de tête d'outil (25) et une unité d'entraînement d'extrudeuse (26) pour l'entraînement d'une vis d'extrusion, de façon à spécifier une pression de décharge de consigne et de transmettre un signal de réglage à l'unité d'entraînement de l'extrudeuse en fonction d'une différence déterminée entre la pression de décharge de consigne et la pression de décharge réelle.

3. Installation d'extrusion de silicone selon l'une des revendications 1 ou 2, **caractérisée par** au moins un capteur de température de décharge (28) pour la mesure d'une température de décharge réelle de la masse de silicone à extruder, lequel capteur de température de décharge est disposé dans la tête d'outil (24) de l'extrudeuse de silicone (2), le capteur de température de décharge (28) étant en communication de signal avec l'unité de régulation (22).

4. Installation d'extrusion de silicone (1) selon l'une des revendications 1 à 3, **caractérisée en ce que**
- la vis d'alimentation (9) comporte une enveloppe conique par sections (9a ; 9_{K}),
- la vis d'alimentation (9) comporte une enveloppe cylindrique par sections (9b ; 9z).

5. Installation d'extrusion de silicone selon l'une des revendications 1 à 4, **caractérisée en ce que** la vis d'alimentation (9) est disposée de manière adjacente à une paroi d'entonnoir (14) de la trémie d'alimentation (5).

6. Installation d'extrusion de silicone selon l'une des revendications 1 à 5, **caractérisée en ce qu'**un angle de cône de vis (α_{B}) de la section (9a, 9_{K}) à enveloppe conique diverge d'un angle de cône de trémie (α_{A}) de la trémie d'alimentation (5).

7. Installation d'extrusion de silicone selon l'une des revendications 1 à 6, **caractérisée en ce qu'**un rapport d'aspect L_{K}/L_{Z} entre la section (9a, 9_{K}) à enveloppe conique et la section (9b, 9_{Z}) à enveloppe cylindrique est compris entre 1 et 3.

8. Installation d'extrusion de silicone selon l'une des revendications 1 à 7, **caractérisée par** une commande (19) en communication de signal avec les entraînements rotatifs (10, 15).

9. Procédé d'extrusion de silicone comportant les étapes suivantes :
- fourniture d'une installation d'extrusion de silicone (2) selon l'une des revendications 1 à 8,
- chargement de la masse de silicone à extruder dans le dispositif d'alimentation de silicone (3),
- transport de la masse de silicone à travers le dispositif d'alimentation de silicone (3) et l'extrudeuse de silicone (2),
- décharge de l'extrudat de l'extrudeuse de silicone (2).
